Europäisches Patentamt

European Patent Office

Office européen des brevets

(11) Publication number: **0 084 457**
**B1**

# EUROPEAN PATENT SPECIFICATION

(45) Date of publication of patent specification: **23.07.86**

(51) Int. Cl.⁴: **C 07 F 7/22, A 01 N 55/04**

(21) Application number: **83300239.7**

(22) Date of filing: **18.01.83**

(54) Derivatives of biologically active substituted tin compounds, emulsifiable concentrates of said derivatives and methods of controlling plant infestations.

(30) Priority: **19.01.82 GB 8201391**

(43) Date of publication of application:
**27.07.83 Bulletin 83/30**

(45) Publication of the grant of the patent:
**23.07.86 Bulletin 86/30**

(84) Designated Contracting States:
**BE CH DE FR IT LI NL**

(56) References cited:
EP-A-0 049 643
US-A-2 630 442
US-A-3 179 676
US-A-3 703 588

CHEMICAL ABSTRACTS, vol. 96, no. 13, 29th
March 1982, pages 725-726, no. 104423p,
Columbus Ohio (USA); K.C. MOLLOY et al.:
"Oxy- and thiophosphorus acid derivatives of
tin. IX. Di- and triorganotin (IV)
diphenylphosphate esters".

(73) Proprietor: **THE DOW CHEMICAL COMPANY**
**2030 Dow Center Abbott Road P.O. Box 1967**
**Midland, MI 48640 (US)**

(72) Inventor: **Mulqueen, Patrick Joseph**
**16 Willow Road South Wootton**
**Kings Lynn Norfolk (GB)**
Inventor: **Dutton, Robert**
**Home Farm North Wootton**
**Kings Lynn Norfolk (GB)**

(74) Representative: **Allard, Susan Joyce et al**
**BOULT, WADE & TENNANT 27 Furnival Street**
**London EC4A 1PQ (GB)**

(56) References cited:
**Comprehesive Organometallic Chemistry Vol.**
**2, page 571**

**Organometallic Compounds Vol. II 2nd Ed.**
**First Supplement page 580 and Vol. II page 352**
**and 356**

Courier Press, Leamington Spa, England.

EP 0 084 457 B1

# 0 084 457

**Description**

The present invention relates to derivatives of biologically active substituted tin compounds, emulsifiable concentrates containing the derivatives and to methods for controlling plant infestations using the substituted tin derivatives.

Tricyclohexyltin hydroxide (commonly referred to as cyhexatin) is an acaricide effective by contact against the motile stages of a wide range of phytophagus mites, such as *Tetranychus urticae*. It is generally essentially insoluble in water and most common organic solvents suitable for use in agrochemical formulations e.g., aromatic hydrocarbons such as xylene. For this reason, cyhexatin has been prepared in the form of particulate preparations, such as a wettable powder.

More recently, the ability to reduce the particle size in a wet-milling process has lead to the development of a suspension of cyhexatin in water which is used as an aqueous flowable formulation. It is, however, a complicated production process to balance the optimum activity with the desired lack of phytotoxicity of the cyhexatin to the crops, e.g., hops, citrus and deciduous fruits in formulations containing particulate cyhexatin.

A considerable amount of research has been conducted in an effort to produce solutions of cyhexatin in an organic solvent (containing an emulsifier) which solutions can readily be dispersed in water. These concentrated solutions are generally referred to as "emulsifiable concentrates". Unfortunately, heretofore, emulsifiable concentrates of cyhexatin have been generally deficient in their pesticidal activity, or possessed increased phytotoxicity. Therefore emulsifiable concentrations of cyhexatin have not been commercially available.

Triphenyltin hydroxide (commonly referred to as fentin hydroxide) is a non-systemic fungicide effective for the control of early and late blights of potato, leaf spot on sugar beet and similar fungicidal diseases. It is also generally essentially insoluble in water. Although soluble to a limited degree in various common organic liquids, the fentin hydroxide is often phytotoxic in emulsifiable concentrate formulations. For this reason, when employed for the control of plant fungi against which fentin hydroxide is active, the formulations of fentin hydroxide have been prepared as a wettable powder or as a concentrated, aqueous suspension. These however show only a short persistence of activity under the normal climate conditions of use, since particulate materials are usually readily washed off the plants.

Surprisingly, it has now been found that the lipophilic strong anionic derivatives of biologically active substituted tin compound are readily soluble in common, organic liquids.

Accordingly, the present invention provides an organic soluble derivative of a biologically active substituted tin compound with a lipophilic strong acid containing sulphur or a salt thereof, wherein the lipophilic anion is a $C_6$—$C_{18}$ alkyl aryl sulphonate, a long chain, optionally substituted, alkyl sulphate, an ether sulphate, an olefin sulphonate, or the corresponding acids of such lipophilic anions.

Due to their increased solubility in common organic solvents suitable for use in agricultural formulation, the derivatives are easily formulated as emulsifiable concentrates and, in another aspect, the present invention provides an emulsifiable concentrate comprising as the sole agricultural chemical a biologically active substituted tin compound, at least one mole equivalent thereof of a $C_6$—$C_{18}$ alkyl benzene sulphonic acid, or a salt thereof, and an organic liquid.

The derivatives of the present invention, when compared to the known formulations of cyhexatin and fentin hydroxide exhibit one or more of the following advantages:

    a) reduced phytotoxicity,
    b) increased efficacy,
    c) improved dilution characteristics,
    d) greater ease of application in aerial spraying,
    e) improved compatibility for formulation with other pesticides, or
    f) improved tank-mix compatibility with other pesticides.

The derivatives of the present invention are the lipophilic strong anionic derivatives of biologically active substituted tin compounds. By the term "lipophilic strong anion" as used herein, is meant the anion of an acid, or the salt thereof, containing a sulphur atom. Such strong acids have a pKa of 3 or below at 25°C, preferably below 2.5 at 25°C.

The present invention also provides an organic soluble substituted tin compound with a phosphate ester of an ethoxylated alkylphenol.

Due to the desirable balance between efficacy and phytotoxicity obtained, the most preferred of the lipophilic strong acids or their salts employed in the practice of the present invention are the $C_6$—$C_{18}$ alkylaryl-sulphonic acids preferably the $C_6$—$C_{18}$ alkylbenzene-sulphonic acids, most preferably dodecyl or tridecyl-benzenesulphonic acid, and the alkali metal salts of the said acids. An example of such a derivative is a tridecyl benzene sulphonic acid derivative of fentin hydroxide.

The derivatives can be prepared in neat form by treating at room temperature the biologically active substituted tin compound with an approximately equivalent amount of the desired lipophilic strong acid or a suitable salt thereof in a relatively volatile organic liquid such as a lower alkane, e.g. hexane, or a substituted alkane, e.g. dichloromethane. Upon removal of the orgnaic liquid, a technical grade product which can be formulated into conventional emulsifiable concentrates or flowable compositions is obtained.

The derivatives of the present invention may be formulated in various ways. For example, by properly

2

selecting the diluent, the derivatives can be prepared as a solution, an aqueous dispersion, an aqueous emulsion, a dusting powder or a dispersible powder, an emulsifiable concentrate, a dispersible concentrate or an aerosol.

In a second aspect of the present invention, the derivatives are prepared as emulsifiable concentrates. In general emulsifiable concentrates are concentrated solutions of the biologically active substituted tin derivatives in an inert organic liquid. The term emulsifiable concentrate also includes concentrated emulsions containing the derivative, water and optionally an organic liquid for further dilution in water or organic liquids according to use requirements. Representative of inert organic liquids which can be employed in preparing the emulsifiable concentrates are the various aromatic liquids such as xylene, propylbenzene and mixed naphthalene fractions; mineral oils; substituted aromatic organic liquids such as dioctyl phthalate; kerosene; a polybutene; dialkylamides of various fatty carboxylic acids such as the dimethyl amide of caprylic acid; glycols and glycol derivatives such as the-butyl ether, ethyl ether or methyl ether of diethylene glycol; the methyl ether of dipropylene glycol; the n-butyl ether of the ethylene glycol; the ethyl, methyl or phenyl ether of ethylene glycol; or the methyl ether of propylene or tripropylene glycol; or mixtures thereof. The preferred organic liquids are the aromatic liquids, with xylene and propylbenzene fractions being most preferred.

The concentration of the derivative in the emulsifiable concentrate most advantageously employed will vary depending on the specific derivative and organic liquid employed and the desired end use application of the emulsifiable concentrate or the aqueous emulsion prepared therefrom. In general, the derivative is employed in an amount sufficient such that the desired concentration of the derivative is obtained upon subsequent dilution in water. In general, the emulsifiable concentrate will contain from 5 to 50, preferably from 20 to 40, weight percent of the substituted biologically active tin compound based on the total weight of the emulsifiable concentrate.

In addition to the organic liquid and the tin derivative, the emulsifiable concentrate will generally comprise at least of one a surfactant or emulsifier to ensure the ready dispersion of the concentrate upon its subsequent dilution in water. The surfactants suitably employed herein are those surface active agents which are compatible with the derivative and the organic liquid employed in preparing the emulsifiable concentrate and which permit the subsequent dispersion of the derivative as an emulsion in water. A preferred surfactant is an alkoxylation derivative of a fatty amine. Emulsifiers which can be advantageously employed herein can be readily determined by those skilled in the art and include various nonionic, anionic, cationic or amphoteric emulsifiers, or a blend of two or more emulsifiers can be employed. Examples of nonionic emulsifiers useful in preparing the emulsifiable concentrates include the polyalkylene glycol emulsifiable concentrates include the polyalkylene glycol ethers and condensation products of alkylphenols, aliphatic alcohols, aliphatic amines or fatty acids with ethylene oxide, propylene oxide or mixtures of ethylene and propylene oxides such as the ethoxylated alkyl phenols, e.g., nonyl phenoxypoly(ethylene oxy) ethanol and ethoxylated aliphatic alcohols, e.g., alkyl poly(ethylene oxy) ethanol, and the carboxylic esters solubilized with the polyol or polyoxy ethylene. Cationic emulsifiers include quaternary ammonium compounds and fatty amines. Preferred emulsifiers for emulsifiable concentrates are nonionics and organosoluble anionics or blends thereof such as Tensiofix B7416 and B7453, with the most preferred being the alkoxylation derivatives of fatty amines, e.g., Ethomeen C-25. (Tensiofix and Ethomeen are Registered Trade Marks).

The amounts of the tin derivatives most advantageously employed are dependent upon various factors including the specific derivative, surfactant and organic liquid employed in preparing the emulsifiable concentrate and the end use application. The surfactant is employed in an amount sufficient to ensure that the concentrate can be dispersed in water to form an emulsion or suspension having the desired stability. Such amounts will vary depending on the derivative and organic liquid employed in the emulsifiable concentrate and the desired end use application. In general, the emulsifiable concentrates will contain preferably from 20 to 40, weight percent of the substituted biologically active tin compound from 1.0 to 50 preferably from 10 to 35 weight percent of one or more emulsifiers, with a balance being the organic liquid or mixture of organic liquids.

In general, the anionic derivative of cyhexatin or fentin hydroxide is advantageously prepared directly in the form of an emulsifiable concentrate by admixing in the desired organic liquid, the cyhexatin or fentin hydroxide with the desired lipophilic strong acid without the need for heating to form a stable derivative. Although, in general, the emulsifiable concentrates are prepared as a dispersion of finely divided cyhexatin or fentin hydroxide derivatives in the liquid, by properly selecting the organic liquid and emulsifiers employed, the emulsifiable concentrates can be utilized as micellar solutions (solubilized formulations).

In conventional application the thus-prepared emulsifiable concentrates can be diluted in water to form an emulsion ready for use. Alternatively, by appropriate choice of solvents the emulsifiable concentrate can directly, or upon minimal dilution, be applied using ultra-low volume techniques (ULV). In addition, by the techniques described in G.B. Patent Application No. 2,022,401: S.A. Patent Application No. 79-2569: and EP Application Nos. 0039144 and 0003251, the emulsifiable concentrates can be prepared for use as electrostatic or electrodynamic spray applications.

The emulsifiable concentrates of cyhexatin of the present invention can also be used as animal health care products for the control of animal and poultry ectoparasites such as ixodid ticks.

The present invention will be further described with reference to the following Examples:—

Example 1

An emulsifiable concentrate of a cyhexatin derivative was prepared by slurrying cyhexatin (200 g) in xylene (400 g) at room temperature and adding dodecylbenzene-sulphonic acid (176 g) to form a stable derivative. Following this neutralization the mixture was treated with a surfactant (Ethomeen C-25 [100 g]) and xylene added to volume (to 1 litre). The resultant solution concentrate contained 200 g/litre cyhexatin and was dilutable in water producing satisfactory emulsions for application to crops.

Example 2

An emulsifiable concentrate of a cyhexatin derivative was prepared by slurrying cyhexatin (200 g) in dichloromethane (1 litre) at room temperature and adding dodecylbenzenesulphonic acid (176 g). The mixture after this neutralization was poured into water, the dichloromethane extract collected, dried and evaporated to give the dodecylbenzenesulphonic acid derivative. This derivative was a viscous oil which crystallised slowly on standing, m.p. 152—6°C. Its structure was determined by elemental analysis and n.m.r. 36 g of this derivative (equivalent to 20 g cyhexatin) was formulated as an emulsifiable concentrate by mixing the following ingredients.

| | |
|---|---|
| Acid derivative (20 g cyhexatin) | 36 g |
| Tensiofix B 7416 | 3 g |
| Tensiofix B 7453 | 7 g |
| Xylene | to 100 |

Example 3

An emulsifiable concentrate of a fentin hydroxide derivative was prepared by slurrying fentin hydroxide (200 g) in xylene (400 g) at room temperature and adding dodecylbenzenesulphonic acid (182 g). The mixture, after this neutralization was treated with a surfactant (Ethomeen C-25 [100 g]) and xylene added to volume (1 litre). The resultant emulsifiable concentrate contained 200 g/litre fentin hydroxide and was dilutable in water, producing satisfactory emulsions for application to crops.

Example 4

In a similar manner to that described in Example 1 emulsifiable concentrates were produced by reaction of cyhexatin with the following acids:—

a) tridecylbenzenesulphonic acid.
b) Emcol CS151 (a phosphate ester of an ethoxylated alkyl phenol with about 11 moles of ethylene oxide).
c) Phospholan PNP-9 (a phosphate ester of an ethoxylated alkyl phenol with about 9 moles of ethylene oxide).
d) Emcol CS131 (a phosphate ester of an ethoxylated alkyl phenol with about 6 moles of ethylene oxide).

(Emcol is a Registered Trade Mark).

Example 5

Biological testing was carried out as follows using the cyhexatin e.c. from Example 1 as well as using as the control an aqueous suspension concentrate formulation containing 600 g per litre cyhexatin (Plictran 600F) and as comparative formulations the lauric acid and oleic acid derivatives produced according to Example 4.

(Plictran is a Registered Trade Mark).

Slide assay

Ten adult female glasshouse red spider mites *Tetranychus urticae* (Koch) reared on pinto beans were fixed by their dorsal surfaces to 7.62 cm×2.54 cm (3″×1″) glass microscope slides using double-sided tape. The experimental formulation was diluted in distilled water to the desired concentration and the solution was applied using a Potter Tower apparatus calibrated to produce a deposit of 600 litres per hectare.

The treated slides were allowed to dry under a fume-hood and then incubated at 30°C and 70—80 percent relative humidity. Mortality counts were made after 24 hours and the response expressed as a percentage.

The mortality data from the treatments were compared with that from the controls and adjusted using Abbot's formula. The percentage mortality: dose relationship is calculated and the final result is expressed as the parts per million necessary to give 90 percent kill.

4

Eradicant assay

Active stage mites and eggs of the glasshouse red spider mite *Tetranychus urticae* (Koch) were reared onto pinto beans. For the experiments, individually potted pinto bean plants with two fully expanded true leaves were infected naturally with an inoculum of mites from the stock cultures 24 hours before treatment. Immediately prior to treatment, the dried remains of leaves from the inoculum were removed. Four plants were sprayed at each dose rate.

The formulations were diluted in distilled water to the desired concentration. The contaminated plants were treated on a turntable spray machine, each plant being rotated through two turns and at the same time sprayed from twin-jets so that the top and underside of the leaves are treated.

When dry, the treated plants are kept in a glasshouse at 20°—25°C, 70—80 percent relative humidity with a minimum 12 hour photoperiod.

The plants were assessed for activity using a low power binocular microscope after 48 hours and nine days using the following scores:

0=all mites alive as in controls
1=most mites alive; few dead
2=most mites dead; few alive
3=all mites dead.

The scores of the four replicates at each dose rate are totalled to produce a score out of a maximum of 12. For comparative purposes, the Minimum Effective Concentration (MEC) is taken as a score of 10 out of 12.

The results of tests were as follows:

| | Eradicant | | Slide |
|---|---|---|---|
| | (MEC) ppm | Phytotoxicity to Pinto Beans at 60 ppm | $LC_{90}$ ppm |
| Experimental | 10—20 | 0 | 20—40 |
| Formulation (Example 1) Cyhexatin | 10—20 | 2.0 | 10—20 |
| Control Comparative Formulation A (Example 5 lauric acid) | 10—20 | 3.0 | 20—40 |
| Comparative Formulation B (Example 5 oleic acid) | 10—20 | 3.0 | 20—40 |

The phytotoxicity was graded as follows:
0=none
1=slight
2=moderate
3=severe
4=very severe
5=plant dead.

Example 6
Field trials

An emulsifiable concentrate of the present invention (Example 1 cyhexatin EC as previously described) was compared in field trials with a composition comprising 20% dicofol and 6.25% tetradifon (Childion) and a composition comprising 8% tetradifon (Tedion V-18) for controlling red spider mite *(Panonychus ulmi)* in apple orchards.

The apple orchards were sprayed with the various compositions following standard commercial practice. After periods of 10 and 30 days leaves from the sprayed trees were collected and the number of live red spider mites counted and then assessed in relation to the number of live red spider mites on the untreated controls. The final results were corrected for control mortality using the Henderson and Tilton formula and expressed as percentage kill. The results were expressed as percentage kill. The results were as follows:—

TRIAL 1

|  | Rate applied grams/hectare | Kill after 10 days | Kill after 30 days |
|---|---|---|---|
| Composition |  |  |  |
| Cyhexatin EC | 420 | 92.05 | 95.38 |
| Childion | 1180 | 58.48 | 84.57 |
| Tedion V-18 | 280 | 25.04 | 48.58 |

(Childion and Tedion are Registered Trade Marks).

TRIAL 2

|  | Rate applied grams/hectare | Kill after 10 days | Kill after 30 days |
|---|---|---|---|
| Composition |  |  |  |
| Cyhexatin EC | 420 | 85.13 | 96.43 |
| Childion | 1180 | 75.08 | 82.30 |
| Tedion V-18 | 280 | 75.00 | 34.48 |

TRIAL 3

|  | Rate applied grams/hectare | Kill after 10 days | Kill after 30 days |
|---|---|---|---|
| Composition |  |  |  |
| Cyhexatin EC | 420 | 93.99 | 96.89 |
| Childion | 1180 | 43.84 | 88.92 |
| Tedion V-18 | 280 | 54.83 | 60.94 |

Example 7

Phytotoxicity evaluation on apple

Cyhexatin e.c. (as produced in Example 1) applied at rates of between 300 and 600 g/ha to apple orchards did not induce significant russetting. This is commercially acceptable since russetting would be an indication of phytotoxicity.

Example 8

Phytotoxicity evaluation of Fentin hydroxide e.c.

Tests have shown acceptable phytotoxicity ratings of the product produced by Example 3 when tested in comparison to commercial fentin hydroxide wettable powder formulations.

**Claims**

1. An organic soluble derivative of a biologically active substituted tin compound with a lipophilic strong acid containing sulphur or a salt thereof, wherein the lipophilic anion is a $C_6$—$C_{18}$ alkylaryl-sulphonate, a long chain, optionally substituted, alkyl sulphate, an ether sulphate, an olefin sulphonate, or the corresponding acids of such lipophilic anions.

2. A derivative as claimed in Claim 1 wherein the substituted tin compound is cyhexatin.

3. A derivative as claimed in Claim 1 or Claim 2 wherein the lipophilic strong acid is a $C_6$—$C_{18}$ alkylbenzenesulphonic acid.

4. A derivative as claimed in Claim 1 wherein the substituted tin compound is fentin hydroxide.

5. A derivative as claimed in Claim 4 wherein the lipophilic strong acid is a $C_6$—$C_{18}$ alkyl-benzenesulphonic acid.

6. A dodecylbenzenesulphonic acid derivative of cyhexatin.

7. A dodecylbenzenesulphonic acid derivative of fentin hydroxide.

8. A tridecylbenzenesulphonic acid derivative of cyhexatin.

9. A tridecylbenzenesulphonic acid derivative of fentin hydroxide.

10. An organic soluble derivative of a biologically active, substituted tin compound with a phosphate ester of an ethoxylated alkylphenol.

11. An emulsifiable concentrate comprising as the sole agricultural chemical a biologically active substituted tin compound, at least one mole equivalent thereof of a $C_6$—$C_{18}$ alkylbenzenesulphonic acid, or a salt thereof, and an organic liquid.

12. An emulsifiable concentrate as claimed in Claim 11 wherein the biologically active substituted tin compound is cyhexatin or fentin hydroxide.

13. A concentrate as claimed in Claim 11 or Claim 12 wherein the organic liquid is xylene; a propylbenzene fraction, a mixed naphthalene fraction; dioctyl phthalate; kerosene; a polybutene; a mineral oil; a dimethylamide of a fatty acid; an n-butyl ether of diethylene glycol; an ethyl ether of diethylene glycol; a methyl ether of diethylene glycol; a methyl ether of dipropylene glycol; an n-butyl ether of ethylene glycol; an ethyl, methyl or phenyl ether of ethylene glycol; a methyl ether of propylene or tripropylene glycol; or a mixture thereof.

14. An aqueous emulsion comprising an emulsifiable concentrate as claimed in any one of claims 11 to 13 wherein the diluent is water.

15. A composition as claimed in any one of claims 11 to 14 which contains, in addition, a surfactant.

16. A composition as claimed in claim 15 wherein the surfactant is an alkoxylation derivative of a fatty amine.

17. A method for controlling plant infestations which comprises applying a composition as claimed in any one of claims 11 to 16, to the locus of the infestation.

18. A composition as claimed in claim 12 for use in the control of animal and poultry ectoparasites.


**Patentansprüche**

1. Organisches lösliches Derivat einer biologisch aktiven substituierten Zinnverbindung mit einer lipophilen, Schwefel enthaltenden starken Säure oder einem Salz davon, worin das lipophile Anion ein $C_6$—$C_{18}$-Alkylarylsulfonat, ein langkettiges, gegebenenfalls substituiertes Alkylsulfat, ein Äthersulfat, ein Olefinsulfonat, oder die korrespondierenden Säuren solcher lipophiler Anionen bedeutet.

2. Derivat nach Anspruch 1, dadurch gekennzeichnet, daß die substituierte Zinnverbindung Cyhexatin ist.

3. Derivat nach Anspruch 1 oder 2, dadurch gekennzeichnet, daß die lipophile starke Säure eine $C_6$—$C_{18}$-Alkylbenzolsulfonsäure ist.

4. Derivat nach Anspruch 1, dadurch gekennzeichnet, daß die substituierte Zinnverbindung Fentihydroxid ist.

5. Derivat nach Anspruch 4, dadurch gekennzeichnet, daß die lipophile starke Säure eine $C_6$—$C_{18}$-Alkylbenzolsulfonsäure ist.

6. Ein Dodecylbenzolsulfonsäurederivat von Cyhexatin.

7. Ein Dodecylbenzolsulfonsäurederivat von Fentinhydroxid.

8. Ein Tridecylbenzolsulfonsäurederivat von Cyhexatin.

9. Ein Tridecylbenzolsulfonsäurederivat von Fentinhydroxid.

10. Organisches lösliches Derivat einer biologisch aktiven, substituierten Zinnverbindung mit einem Phosphatester eines äthoxylierten Alkylphenols.

11. Emulgierbares Konzentrat, dadurch gekennzeichnet, daß es als einzige Agrochemikalie eine biologisch aktive substituierte Zinnverbindung, in einer Menge von mindestens einem Moläquivalent davon eine $C_6$—$C_{18}$-Alkylbenzolsulfonsäure oder ein Salz davon, und eine organische Flüssigkeit umfaßt.

12. Emulgierbares Konzentrat nach Anspruch 11, dadurch gekennzeichnet, daß die biologisch aktive substituierte Zinnverbindung Cyhexatin oder Fentinhydroxid ist.

13. Konzentrat nach Anspruch 11 oder 12, dadurch gekennzeichnet, daß die organische Flüssigkeit Xylol; eine Propylbenzolfraktion, eine gemischte Naphthalinfraktion; Dioctylphthalat; Kerosin; ein Polybuten; ein Mineralöl; ein Dimethylamid einer Fettsäure; ein n-Butyläther von Diäthylenglykol; ein Äthyläther von Diäthylenglykol; ein Methyläther von Diäthylenglykol; ein Methyläther von Dipropylenglykol; ein n-Butyläther von Äthylenglykol; ein Äthyl-, Methyl- oder Phenyläther von Äthylenglykol; ein Methyläther von Propylen- oder Tripropylenglykol; oder eine Mischung davon ist.

14. Wäßrige Emulsion, dadurch gekennzeichnet, daß sie ein emulgierbares Konzentrat nach einem der Ansprüche 11 bis 13 umfaßt, worin das Verdünnungsmittel Wasser ist.

15. Zusammensetzung nach einem der Ansprüche 11 bis 14, dadurch gekennzeichnet, daß es zusätzlich ein oberflächenaktives Mittel enthält.

16. Zusammensetzung nach Anspruch 15, dadurch gekennzeichnet, daß das oberflächenaktive Mittel ein Alkoxylierungsderivat eines Fettamins ist.

17. Verfahren zur Kontrolle von Pflanzenbefall, dadurch gekennzeichnet, daß man eine Zusammensetzung nach einem der Ansprüche 11 bis 16 an den Ort des Befalls appliziert.

18. Zusammensetzung nach Anspruch 12 für die Verwendung zur Kontrolle von Tier- und Geflügel-Ektoparasiten.

# 0 084 457

**Revendications**

1. Dérivé soluble dans les liquides organiques d'un composé d'étain substitué et biologiquement actif avec un acide lipophile fort contenant du soufre ou un sel de celui-ci, dans lequel l'anion lipophile est un (alkyle en $C_6$—$C_{18}$)-arylsulfonate, un alkylsulfate facultativement substitué à chaîne longue, un éthersulfate, un oléfino-sulfonate ou les acides correspondants de tels anions lipophiles.

2. Dérivé selon la revendication 1, dans lequel le composé d'étain substitué est le cyhexa-étain.

3. Dérivé selon la revendication 1 ou 2, dans lequel l'acide lipophile fort est un acide (alkyle en $C_6$—$C_{18}$)-benzènesulfonique.

4. Dérivé selon la revendication 1, dans lequel le composé d'étain substitué est l'hydroxyde de fenétain.

5. Dérivé selon la revendication 4, dans lequel l'acide lipophile fort est un acide (alkyle en $C_6$—$C_{18}$)-benzènesulfonique.

6. Dérivé d'acide dodécylbenzènesulfonique du cyhexa-étain.

7. Dérivé d'acide dodécylbenzènesulfonique d'hydroxyde de fenétain.

8. Dérivé d'acide tridécylbenzènesulfonique de cyhexa-étain.

9. Dérivé d'acide tridécylbenzènesulfonique d'hydroxyde de fenétain.

10. Dérivé soluble dans les liquides organiques d'un composé d'étain substitué et biologiquement actif avec un ester phosphate d'un alkylphénol éthoxylé.

11. Concentré émulsifiable comprenant, comme seul produit chimique agricole, un composé d'étain substitué et biologiquement actif, au moins un mole-équivalent de celui-ci d'un acide (alkyle en $C_6$—$C_{18}$)-benzènesulfonique ou un sel de celui-ci, et un liquide organique.

12. Concentré émulsifiable selon la revendication 11, dans lequel le composé d'étain substitué biologiquement actif est le cyhexa-étain ou l'hydroxyde de fenétain.

13. Concentré selon la revendication 11 ou 12, dans lequel le liquide organique est le xylène; une fraction de propylbenzène, une fraction de naphtalènes mélangés; le phtalate de dioctyle; le kérosène; un polybutène; une huile minérale; un diméthylamide d'un acide gras; un éther n-butylique de diéthylène-glycol; un éther éthylique de diéthylène-glycol; un éther méthylique de diéthylèneglycol; un éther méthylique de dipropylène-glycol; un éther n-butylique d'éthylène-glycol; un éther éthylique, méthylique ou phénylique d'éthylène-glycol; un éther méthylique de propylène- ou tripropylène-glycol; ou un mélange de ceux-ci.

14. Emulsion aqueuse comprenant un concentré émulsifiable selon l'une quelconque des revendications 11 à 13, dans laquelle le diluant est l'eau.

15. Composition selon l'une quelconque des revendications 11 à 14, qui contient en outre un tensio-actif.

16. Composition selon la revendication 15, dans laquelle le tensio-actif est un dérivé alcoxylé d'une amine grasse.

17. Procédé de lutte contre les maladies des plants, qui consiste à appliquer une composition selon l'une quelconque des revendications 11 à 16 au lieu d'infestation.

18. Composition selon la revendication 12, pour utilisation dans la lutte contre les ectoparasites des animaux et des volailles.

8